# EUROPEAN PATENT APPLICATION

(11) **EP 4 580 117 A1**
(43) Date of publication of application: **02.07.2025**
(21) Application number: 23307409.5
(22) Date of filing: 28.12.2023
(51) Int. Cl.: H04L 9/32

(54) **METHOD TO EXECUTE A HYBRID SIGNATURE**

(71) Applicant: THALES DIS FRANCE SAS, 92190 Meudon (FR)
(72) Inventor: DEBOIS, Georges, 75013 Paris (FR); FAHER, Mourad, 78160 Marly Le Roi (FR); PONS, Philippe, 78180 Montigny le Bretonneux (FR)
(74) Representative: Quintero Romero, Manuel

(57) **Abstract**

The invention provides a method to execute a suitable hybrid signature by a secure element during communication with a reader; the method comprising:
- the reader sends to the secure element a command to execute the hybrid signature,
- the secure element prompts the reader to fetch parametrized instructions to proceed with the hybrid signature,
- the secure element sends a data structure containing pre-configured cryptographic parametrization to perform at least one hybrid signature,
- the reader receives the data structure and maps the cryptographic parametrization of the secure element with a set of instructions to cause the secure element to perform the suitable hybrid signature,
- the reader sends the set of instructions, and, in response, the secure element sends the result of executing the suitable hybrid signature.

## Description

### TECHNICAL FIELD

This invention relates to the field of post-quantum cryptography, and more particularly to a communication mechanism between a secure element, e.g., Integrated Circuit Card, and a reader improving the execution of hybrid signatures by crypto agility.

### BACKGROUND OF THE INVENTION

The increasing computational power of quantum computers is a growing threat to the security of classical signature protocols such as RSA or ECDSA. Such signature schemes will eventuality be defenceless against attacks performed using quantum computers. Therefore, signatures based on such legacy cryptography will not be reliable anymore. Using a quantum computer, an attacker would be able to discover the private key used to sign such certificates, which would enable him to e.g., issue fraudulent valid certificates.

Such signatures are used in everyday interactions between service provider devices, such as terminals or servers, and user devices, such as Integrated Circuit Card (ICC) or devices embedding secure elements (eSE), for e.g., handshaking or mutual authentication before any data is exchanged between these devices. To prevent attacks using quantum computers, quantum-safe cryptographic (QSC) protocols have been designed. Since nobody envisages yet how the post-quantum era will be shaped, and there will be a transition phase towards full-QSC protocols, cybersecurity agencies (e.g., ANSSI) are endorsing today the combination of legacy cryptographic protocols with quantum-resistant mechanisms giving rise to hybrid protocols.

For example, the Joint Technical Committee ISO/IEC JTC 1, *Information technology,* Subcommittee SC 17, *Cards and security devices for personal identification,* WG4 group, in charge of future evolutions of smartcards, currently investigates this situation and has recently released the ISO/IEC 7816-8:2021 AMD1:2023 setting the foundations for the upcoming security operations using QSC cryptography.

Nevertheless, there are still several choices left at implementer's consideration. For instance, the hashes can be executed, e.g., off-card, on-card, or partly off-card; while the combination of legacy and QSC signatures may be e.g., by concatenation (i.e., the first signature executed by using legacy protocols, and the second one by using QSC protocols, or *vice-versa*) or by using strong nesting (i.e., by encapsulating one signature into the other).

On top of these variants, it is also left open the specific sequence of instructions that the reader shall execute with the card during the well-known and established master-slave data exchange defined by ISO/IEC 7816-8. As an example, some or all of the Perform Security Operation (PSO) commands may be skipped (i.e., become optional).

This implies that, as per today's situation, the reader shall interrogate and guess which mechanism(s) is/are supported by the chip card. Since the reader needs to be interoperable with a big population of different cards, the reader must envisage beforehand all the supported possibilities thus proceeding with a kind of "discoverability" process. That is, the reader gradually investigates the category-sorted static files on the card (so-called in ISO "cryptographic information application") containing crypto assets together with their properties, parametrization, etc.

In short, the secure components can hardly cater to all possible existing and upcoming cryptographic combinations and parameterizations for hybrid signatures and, consequently, there is a need in the industry for easing and speeding up the future communication between secure element and reader when agreeing upon the suitable hybrid signature to use.

### SUMMARY OF THE INVENTION

The present invention provides a solution for all the aforementioned problems by a method to execute a suitable hybrid signature by a secure element during communication with a reader according to claim 1, and a related system according to claim 8. In dependent claims, preferred embodiments of the invention are defined.

In a first inventive aspect, the invention provides a method to execute a suitable hybrid signature by a secure element during communication with a reader; the method comprising:
- the reader sends to the secure element a command to execute the hybrid signature,
- the secure element prompts the reader to fetch parametrized instructions to proceed with the hybrid signature,
- the secure element sends a data structure containing pre-configured cryptographic parametrization to perform at least one hybrid signature,
- the reader receives the data structure and maps the cryptographic parametrization of the secure element with a set of instructions to cause the secure element to perform the suitable hybrid signature,
- the reader sends the set of instructions, and, in response, the secure element sends the result of executing the suitable hybrid signature.

According to the invention, the secure element can be embodied as a standalone chip card or ICC; or as an embedded secure element eSE or integrated secure element iSE embedded/integrated in a user device such as smartphone, connected wearable, etc. In turn, the reader can be embodied as any device able to communicate (e.g., compliant with ISO/IEC 7816-4 standard) with the previous secure element.

For instance, the device hosting the secure element can be an eMRTD such as a passport authenticating a border authority terminal before allowing it to access the identity information stored in the chip of the eMRTD. Similarly, it may be a national electronic identity document elD and the reader may be a government identity verification terminal. As another example, the secure element may be an embedded UICC (eUICC) and the reader may be a payment terminal authenticating to the eUICC before performing an NFC transaction. Alternatively, the secure element device may be an electronic health card, such as eEHIC, and the service provider device may be a healthcare practitioner terminal authenticating to the user device for accessing healthcare data of the user. As a last example, the secure element device may be a user computer or smartphone running a web browser or an application and the reader may be a web server to which the web browser or application connects and which must authenticate to the secure element before the user device sends personal data, such as banking information or account credentials, to the web server.

According to the invention, when the reader instructs the secure element to execute an hybrid signature, instead of proceeding with the discoverability process, the secure element itself prompts the reader to fetch a stored data structure with its pre-configured cryptographic parametrization, i.e., the set of legacy and QSC protocols supported, the type of hybrid signatures supported, and the set of instructions that should receive to execute the suitable or chosen combination successfully.

The reader then fetches the data structure, analyses it and re-organizes the cryptographic parametrization (e.g., nested data objects) to be aware of its capabilities. Advantageously, the reader chooses the suitable hybrid signature depending on the transaction context i.e., reader CVC characteristics, ICC capabilities, specific service, etc.

Since the secure element discloses upfront the set of instructions that shall cause the execution of the suitable hybrid signature, the reader-driven "discoverability" process is spared.

Accordingly, the reader can understand and select among the available combinations or capabilities of the secure element: the way to execute the hashes, the way to instruct the secure element, the way to use the protocols or algorithms supported, the way to prepend data to the message, etc. Advantageously, it is proposed a unified and interoperable approach for the reader to deal with the disparate population of cards, transferring the complexity of the crypto agility to the reader.

On another note, the secure elements can be upgraded or patching without impacting readers or Interface Device Handle (IFD) implementation.

In a particular embodiment, the suitable hybrid signature comprises using at least one legacy cryptographic protocol such as RSA protocol, ECC protocol, ECDSA protocol; and at least one quantum-safe cryptographic protocol such as hash-based, lattices-based and multivariate-based cryptographic protocol.

In a particular embodiment, the set of instructions comprises setting a security context and denoting cryptographic protocols.

In a particular embodiment, the pre-configured cryptographic parametrization is a template encoded using Basic Encoding Rules, BER, Tag + Length + Value, TLV, BER-TLV, data objects.

In a particular embodiment, the data objects of the pre-configured cryptographic parametrization comprise a first data object identifying one legacy cryptographic protocol, a second data object identifying a quantum-safe cryptographic protocol, a third data object with the type of hybridation such as concatenated or strong nested, and a fourth data object indicating the sequence of commands for the reader to process.

In a preferred embodiment, the communication between the secure element and the reader is based on ISO/IEC 7816-4 standard.

In a particular embodiment, the secure element is one of at least: an integrated circuit card, an embedded secure element or an integrated secure element.

In a second inventive aspect, the invention provides a system to execute a suitable hybrid signature by a secure element during communication with a reader. The system comprises:
- the secure element, which is configured to:
   ∘ store a data structure containing pre-configured cryptographic parametrization to perform at least one hybrid signature,
   ∘ in response to a command to execute the hybrid signature, prompt the reader to fetch parametrized instructions to proceed with the hybrid signature,
   ∘ sends the data structure to the reader, and
   ∘ in response to a set of instructions from the reader, execute the suitable hybrid signature and send the result to the reader; and
- the reader, which is configured to:
   ∘ send to the secure element the command to execute the hybrid signature,
   ∘ receive the data structure and map the cryptographic parametrization of the secure element with a set of instructions to cause the secure element to perform the suitable hybrid signature,
   ∘ send the set of instructions to the secure element.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Fig. 1: schematically illustrates a reader according to an embodiment of the present invention.
- Fig. 2: schematically illustrates a secure element according to an embodiment of the present invention.
- Fig. 3: shows a method to execute a suitable hybrid signature by a secure element during communication with a reader of the invention.
- Fig. 4: shows an embodiment of the mapping done by the reader between the secure element data structure and the resulting set of instructions to cause the secure element to perform the suitable hybrid signature.

### DETAILED DESCRIPTION OF THE INVENTION

As it will be appreciated by one skilled in the art, aspects of the present invention may be embodied as method steps, as a system, as a reader or as a secure element.

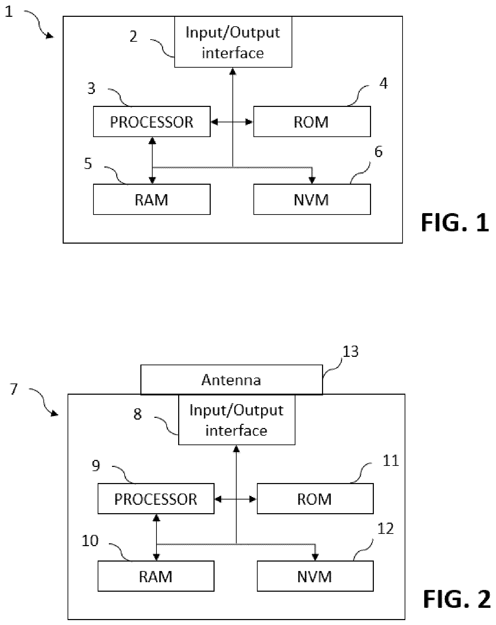

In **figure 1****,** it is depicted a reader 1 that includes a processor 3 connected via a bus to a random-access memory (RAM) 5, a read-only memory (ROM) 4, and/or a non-volatile memory (NVM) 6 and an input/output interface 2.

In **figure 2****,** it is depicted a secure element 7 including a processor 9 connected via a bus to a random-access memory (RAM) 10, a read-only memory (ROM) 11, and/or a non-volatile memory (NVM) 12 and an input/output interface 8.

The reader 1 and the secure element 7 are connected by a communication link. Such a communication link may be a wired communication link. In such a case the input/output interface 8 is an ISO/IEC 7816 interface. Alternatively, such a communication link may be a wireless communication link. In such a case, the input/output interface may be a short-range communication interface such as NFC, or a longer range communication interface such as 3G, 4G or 5G broadband communication cellular network communication interfaces. In such a case, the device hosting the secure element may further include an antenna 13 connected to the input/output interface. The secure element may be embedded or integrated into a host device comprising a wireless communication interface, such as a smartphone, and this communication link between the secure element and the reader may be set through the communication interface of the host device.

The reader 1 may also be connected to a trusted third party device (not shown) by a further communication link.

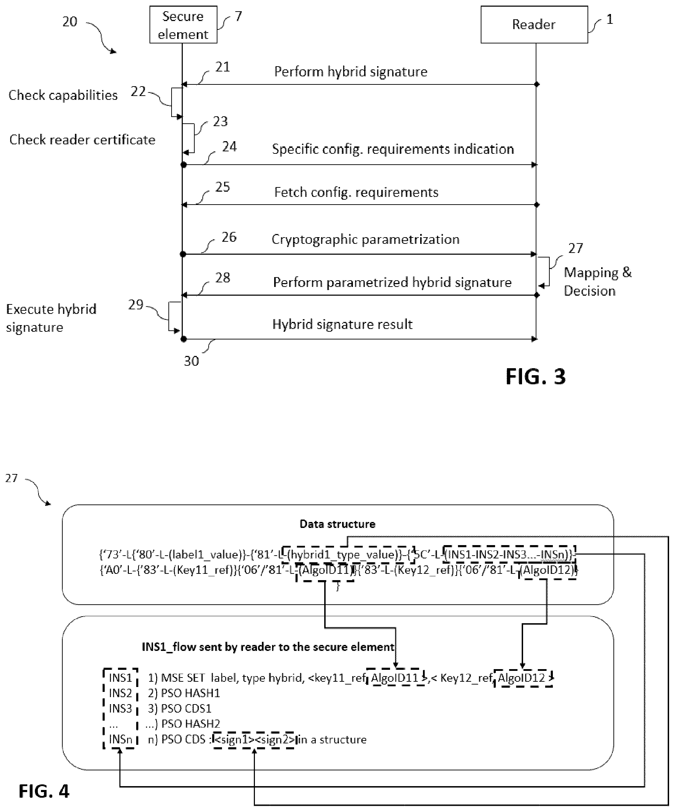

In figure 3, it is depicted a method 20 to execute a suitable hybrid signature by a secure element 7 during communication with a reader 1.

In step 21, the reader instructs the secure element to perform a hybrid signature. Unlike current solutions where such an instruction can only be performed by the secure element once the discoverability process is carried out (e.g., according to ISO/IEC 7816-15) and a security context is established by the reader (e.g., according to ISO/IEC 7816-4, 7816-8, and EN 419 212), in the present invention, a generic instruction is addressed directly to the secure element.

It is noted that, if no hybrid signature is required by the reader but only one signature (e.g., legacy or QSC), today's flow define in ISO with the existing APDU is to be maintained.

Then, in step 22, the card may check its capabilities. This intermediary step can occur either as pre-config or post-config. In short, in step 22, the secure element parses its pre-configured hybrid signature capabilities and match them against context-based information e.g., an access control to wallet held attributes, reader or IFD application evidence (e.g. CVC certificate, qualified or non-qualified electronic attestation, qualified web authentication certificate, attributes, authorization, etc.) that may have been transmitted to the card during the preliminary establishment of a secure session between the card and the reader. Accordingly, the card can decide which hybrid signature(s) can be appropriately delivered to the reader. As an example, the card parameterization decision may depend on the Authentication Assurance Level (AAL) that is required for the current transaction.

At some point during the exchanges, the reader sends its certificate to the secure element which checks it (step 23) as per today's approach.

In step 24, the secure element warns the reader that it has specific configuration requirements. That is, the secure element prompts the reader to fetch parametrized instructions describing how to proceed for hybrid signature. As mentioned during the background section, the secure element is typically slave while the reader is master and, unlike that, the present invention allows the secure element to be proactive and to convey (later in step 26) parameters and instructions-to-execute to guide the reader's actions.

In step 25, the reader sends an instruction to get back parameterized APDUs, e.g., as a GET DATA command. Preferably the READ/GET DATA command has instruction byte INS='CB'.

In step 26, the secure element sends a data structure containing pre-configured cryptographic parametrization and instructions to allow the reader selecting the suitable hybrid signature among the available / supported options of the secure element.

The pre-configured cryptographic parametrization is preferably a template encoded using BER-TLV data objects.

An example of the BER-TLV based template stored in the secure element is as follows:

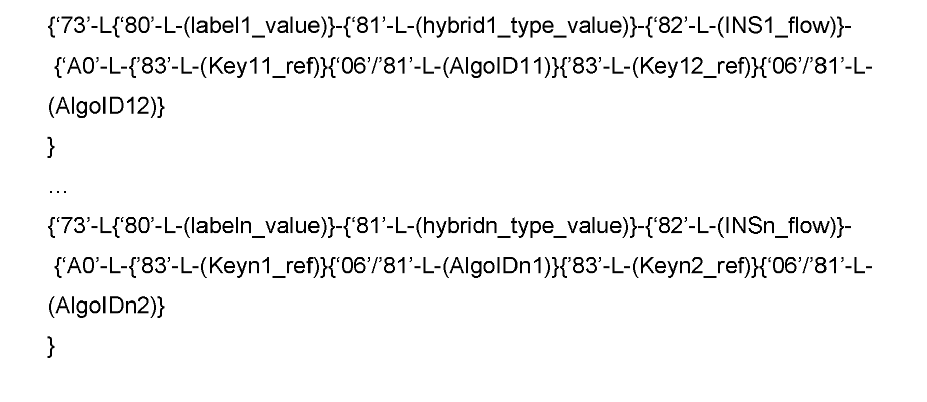

Here we can see *n* nested (`73') data objects, each with a specific *label* (labelᵢ_value). The *type* (hybridᵢ_type_value) denotes whether the hybrid signature is concatenated or strongly nested. The *instruction byte flow* (INSᵢ_flow) denotes the number and order of the instructions-to-execute that the reader needs to send to the card in a typical master-slave communication.

In each of the *n* data objects representing available or supported hybrid signatures, there are at least one legacy protocol (Keyᵢ1_ref; AlgoIDᵢ1) and at least one QSC protocol (Keyᵢ2_ref; AlgoIDᵢ2).

These data structures can be internally extracted from a X.509 hybrid signature certificate or personalized.

In step 27, the reader get to understand the previous template and selects the suitable hybrid signature (i.e., data object) for the secure element to execute among the available or received ones.

Once selected, the data object is mapped in the specific sequence according to INS1_flow. Below is a simplified example of resulting instructions the reader can get from the selected data object (see **figure 4****).**

```
       INS1 : 1) MSE SET label, type hybrid, <key11_ref, AlgoID11>,<Key12_ref,
      AlgolD12>
       INS2 : 2) PSO HASH1
       INS3 : 3) PSO CDS1
       ... : ...) PSO HASH2
       INSn : n) PSO CDSn : <sign1><sign2> in a structure
```

In a particular example, the first field can refer to e.g., the legacy protocol (e.g., RSA, ECDSA); while the second field can refer to e.g., the QSC protocol. For referencing the type: 0x01=concatenated and 0x02= strong nested.

Preferably, the 2 signatures are computed and sent together by the secure element. The digest1 and digest 2 may be different. In a preferred embodiment, only PSO HASH Partial off card is to be used, i.e., if the label is not empty, prepend the message and compute the Hash1 and Hash2 with this label. Advantageously, this simplifies the flow.

Below is an example of how to compute the commands (following ISO/IEC 7816-8:2021 Amd1:2023):

### MSE SET

| | CLA | INS | P1 | P2 | Lc | Datain |
|---|---|---|---|---|---|---|
| MSE | OxOx | 0x22 | 0x00 | 0xC0 | Lc | 0xB6 L -- info. on the legacy protocol |
| SET | | | | | | {0x84 L <keyld1>} {0x80 L <algold1>}{0x97 L <ord. = 0x01>} |
| | | | | | | 0xB6 L -- info. on the QSC protocol |
| | | | | | | {0x84 L <keyld2>} {0x80 L <algold2>}{0x97 L <ord. = 0x02>} |
| | | | | | | 0xB6 L -- info on the shared elem., with tag 0x9E and flag=0x01 |
| | | | | | | {0x9E L 0x01} {0x98 L <hybdrid.type>}[{0x99 L <label>}]} |

*datain* is structured herein exclusively as CRT(s), the extension of P2='C0' allows (i.e., as per ISO/IEC 7816-8:2021 Amd1:2023) only for CRT(s). The contents algo1, keyld1, algo2, keyid2, type of hybrid, {label} shall be nested in as many CRT as necessary. In a particular example, it is used one CRT for algo1, keyid1 and type of hybrid, and another CRT for algo2, keyid2.

By convention, type_of_hybrid can be mandated in the first CRT in cmd data field. As for the label, it can be in first CRT too.

DO'97' and DO'98', appearing in ISO/IEC 7816-8:2021 AMD1:2023 can be re-used.
- DO'97': operation sequence indicator, serves to indicate if the regular or QSC protocol signature shall be executed first.
- DO'98': operation type indicator, serves to denote the type_of_hybrid.

**PSO HASH1** for the legacy protocol. Partial off-card.

| | **CLA** | **INS** | **P1** | **P2** | **Lc** | **Datain** | | **Le** | **Dataout** |
|---|---|---|---|---|---|---|---|---|---|
| PSO HASH | OxOx | 0x2A | 0x90 | 0xA0 | Lc | 0x90 L `NC` | 0x80 L 'B' | Le | Hash value |
| | | | | | | | | | |

**PSO HASH2** for the QSC protocol. Partial off-card.

| | **CLA** | **INS** | **P1** | **P2** | **Lc** | **Datain** | | **Le** | **Dataout** |
|---|---|---|---|---|---|---|---|---|---|
| PSO HASH | OxOx | 0x2A | 0x90 | 0xA0 | Lc | 0x90 L `NC` | 0x80 L 'B' | Le | Hash value |
| | | | | | | | | | |

### PSO CDS

| | **CLA** | **INS** | **P1** | **P2** | **Lc** | **Datain** | **Le** | **Dataout** |
|---|---|---|---|---|---|---|---|---|
| PSO CDS | OxOx | 0x2 B | 0x9E | 0x9A | 0x02 | 0x80 | Le | 0x73 L - header list |
| | | | | | | 0x00 | | {0x80 0x01 0x01} - structured out |
| | | | | | | | | {0x98 L <hybdrid.type>} |
| | | | | | | | | {0x99 L <label>} |
| | | | | | | | | {0x81 L <algold1>} {0x81 L (sign1)} |
| | | | | | | | | {0x82 L <algold2>} {0x82 L (sign2)} |

Moreover, the instructions may come with 1 byte or 2 bytes in parameter P1 since PSO command is a function.

Referring back to figure 3, after the mapping, in step 28, the reader sets the appropriate security context (i.e., MSE SET APDU command) and sends the related instructions denoting the cryptographic functions (i.e., PSO APDU commands). That is, according to the present invention, the reader sends directly the flow of instructions reusing a parameterized hybrid signature combination.

Finally, the secure element receives the instructions, execute the suitable hybrid signature (step 29) and sends back (step 30) the result of having executed the hybrid signature.

## Claims

1. A method (20) to execute a suitable hybrid signature by a secure element (7) during communication with a reader (1); the method comprising:
- the reader sends (21) to the secure element a command to execute the hybrid signature,
- the secure element prompts (24) the reader to fetch parametrized instructions to proceed with the hybrid signature,
- the secure element sends (26) a data structure containing pre-configured cryptographic parametrization to perform at least one hybrid signature,
- the reader receives the data structure and maps (27) the cryptographic parametrization of the secure element with a set of instructions to cause the secure element to perform the suitable hybrid signature,
- the reader sends (28) the set of instructions, and, in response, the secure element sends (30) the result of executing the suitable hybrid signature.

2. The method according to claim 1, wherein the suitable hybrid signature comprises at least one legacy cryptographic protocol such as RSA protocol, ECC protocol, ECDSA protocol; and at least one quantum-safe cryptographic protocol such as hash-based, lattices-based and multivariate-based cryptographic protocol.

3. The method according to any of claims 1 or 2, wherein the set of instructions comprises setting a security context (MSE SET) and denoting cryptographic protocols (PSO HASHᵢ).

4. The method according to any of claims 1 to 3, wherein the pre-configured cryptographic parametrization is a template encoded using Basic Encoding Rules, BER, Tag + Length + Value, TLV, BER-TLV, data objects.

5. The method according to claim 4, wherein the data objects of the pre-configured cryptographic parametrization comprise a first data object identifying one legacy cryptographic protocol, a second data object identifying a quantum-safe cryptographic protocol, a third data object with the type of hybridation such as concatenated or strong nested, and a fourth data object indicating the sequence of commands for the reader to process.

6. The method according to any of claims 1 to 5, wherein the communication between the secure element and the reader is based on ISO/IEC 7816-4 standard.

7. The method according to any of claims 1 to 6, wherein the secure element is one of at least: an integrated circuit card, an embedded secure element or an integrated secure element.

8. A system to execute a suitable hybrid signature by a secure element during communication with a reader; wherein the system comprises:
- the secure element, which is configured to:
∘ store a data structure containing pre-configured cryptographic parametrization to perform at least one hybrid signature,
∘ in response to a command to execute the hybrid signature, prompt the reader to fetch parametrized instructions to proceed with the hybrid signature,
∘ sends the data structure to the reader, and
∘ in response to a set of instructions from the reader, execute the suitable hybrid signature and send the result to the reader; and
- the reader, which is configured to:
∘ send to the secure element the command to execute the hybrid signature,
∘ receive the data structure and map the cryptographic parametrization of the secure element with a set of instructions to cause the secure element to perform the suitable hybrid signature,
∘ send the set of instructions to the secure element.
